Europäisches Patentamt

(19) **European Patent Office**

**Office européen des brevets**

(11) Publication number: **0 198 133**
**B1**

(12) # EUROPEAN PATENT SPECIFICATION

(45) Date of publication of the patent specification:
**24.08.88**

(51) Int. Cl.⁴: **B 01 D 53/08**, B 01 D 46/34

(21) Application number: **85302630.0**

(22) Date of filing: **15.04.85**

(54) A moving bed reactor including a main louvre and a sub-louvre.

(43) Date of publication of application:
**22.10.86 Bulletin 86/43**

(45) Publication of the grant of the patent:
**24.08.88 Bulletin 88/34**

(84) Designated Contracting States:
**DE FR GB**

(56) References cited:
**EP - A - 0 057 468**
**DE - C - 381 500**
**US - A - 3 685 262**
**US - A - 3 987 148**

(73) Proprietor: **MITSUI MINING COMPANY, LIMITED, 1-1, Nihonbashi-Muromachi 2-chome, Chuo-ku Tokyo (JP)**
Proprietor: **MITSUI MIIKE ENGINEERING CORP, 1-1, Nihonbashi-Muromachi 2-chome, Chuo-ku Tokyo (JP)**

(72) Inventor: **Furuyama, Kuninori c/o Tochigi factory, Mitsui Miike engineering Corp. 1, Koumachi, Tochigi-shi Tochigi-ken (JP)**
Inventor: **Ito, Yoshiro c/o Mitsui Mining Company Limited, 1-1, Nihonbashi-Muromachi 2-chome Chuo-ku, Tokyo (JP)**

(74) Representative: **Allard, Susan Joyce et al, BOULT, WADE & TENNANT 27 Furnival Street, London EC4A 1PQ (GB)**

**Description**

This invention relates to a reactor of the moving bed type wherein various reactions and adsorptions for the removal of dusts, SOx and NOx are carried out by contacting a gas, such as waste gases containing SOx and NOx, with a granular material such as carbonaceous adsorbents supported by a louvre as it moves downwards.

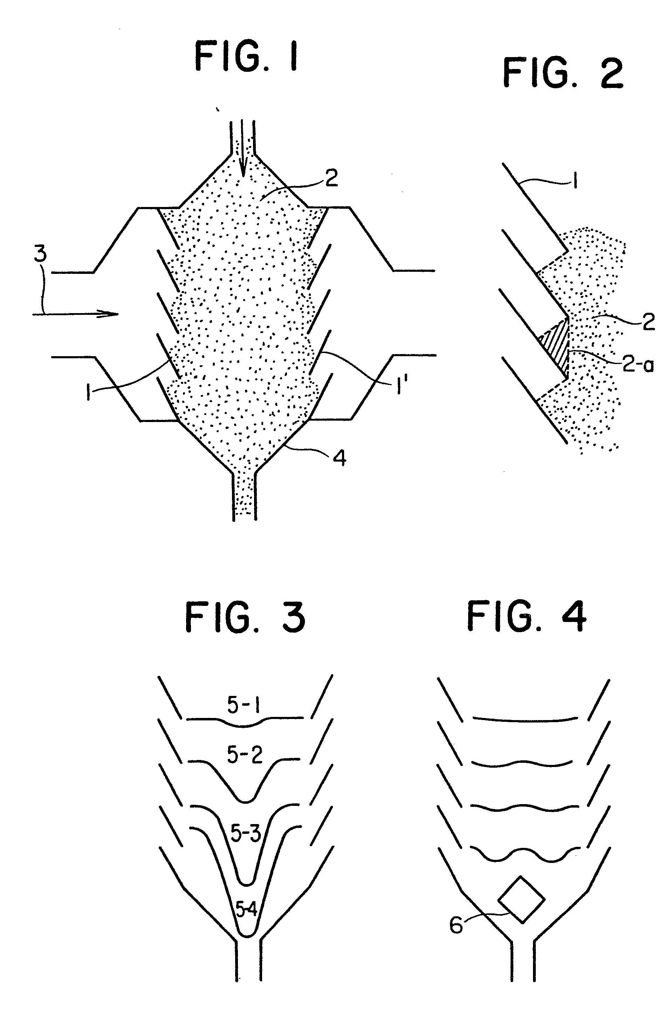

A known form of apparatus is shown in Figure 1. Granular material 2 is packed and held by a pair of louvres 1 and 1', each arranged vertically, and is moved downward to form a moving bed, while gas 3 is introduced into reactor 4, passed transversely through the moving bed via louvre 1 to effect dust removal and reactions, and then discharged from louvre 1' on the opposite side. However, such a reactor has hitherto met with the following problems.

The first problem is that a non-moving region 2-a of granular material 2 is formed on louvre 1 as shown in Figure 2 and accordingly, in the case of feeding a gas with a high dust concentration, dust accumulates at the gas inlet side of the region 2-a, resulting in an increase of gas pressure drop in the reactor. In addition, the region 2-a reaches chemical saturation and chemical products come out of region 2-a, whereby to corrode the louvre and to decrease the whole reaction capacity.

Secondly, the exhaust port of granular material 2 in the reactor is ordinarily narrower than the separation between the louvres 1 and 1', the velocity distribution of the granular material in the moving bed has the form shown by the curves 5-1 to 5-4 of Figure 3. There has been proposed a method wherein various flow regulators 6 (as shown in Figure 4) are provided so as to make the velocity distribution in the moving bed as uniform as possible. However, it is very difficult to control the moving state of the granular material because of the intrinsic non-uniformity thereof and changes in grain size, dust content and moisture content with the passage of time and the difficulty cannot be overcome merely by the provision of a flow regulator.

From the standpoint of dust removal and reactions, on the other hand, granular material 2 in the moving bed is more loaded, in general, nearer the gas inlet side and subjected to the maximum load near the louvre at the gas inlet side. When a reaction product is of a strong adhesiveness, therefore, granular material 2 tends to agglomerate at a low moving velocity and grows to increase the pressure of loss of a gas. In order to avoid this phenomenon, it is preferable to move and replace the granular material at this site at a relatively higher speed, but the prior art method has no counter-measure but leaving it alone unchecked and cannot control the velocity of the bed preferentially.

It is an object of the present invention to provide an improved reactor of the moving bed type, whereby at least some of the above-described disadvantages can be alleviated.

It is a more specific object of the present invention to provide a moving bed reactor in which a granular material is prevented from residence on a louvre and kept in a good moving state to avoid accumulation of dust on a louvre at the gas inlet side and excessive rising of gas pressure drop.

It is a further more specific object of the present invention to provide a moving bed reactor capable of controlling the moving velocity of a granular material at the gas inlet side.

The invention provides a moving bed reactor wherein a granular material is packed and held by a louvre structure, moved downwards and brought into contact with a gas passing through the louvre, characterised in that a sub-louvre, comprising louvre units each of a reverse V-type, is provided inside a main louvre for guiding the granular material; the sub-louvre is aligned in parallel with the main louvre, each louvre unit of the sub-louvre has a vertex positioned at an intermediate height between the boards of the main louvre, one side of each sub-louvre unit is directed toward the inside of the main louvre in a reverse gradient to the main louvre and the other side of each sub-louvre unit is an upright part which is vertical or is inclined at an angle of at most 10 degrees to the vertical.

The accompanying drawings are to illustrate the principle and merits of the present invention in greater detail.

Figure 1 is a cross-sectional view of a prior moving bed reactor in which a granular material is held by louvres.

Figure 2 is a partially enlarged view of the vicinity of a louvre in the moving bed reactor shown in Figure 1.

Figure 3 and Figure 4 are schematic views each showing the flow rate distribution of a granular material in the moving bed reactor of the kind shown in Figure 1.

Figure 5 is a partially enlarged view of the vicinity of a louvre showing the position and structure of a sub-louvre of the prior art.

Figure 6 is a partially enlarged view of the vicinity of the louvre showing the position and structure of a sub-louvre of the present invention, and the flow of granular material.

Figure 7 is a schematic view of one embodiment of a sub-louvre according to the present invention.

Figure 8 is a cross-sectional view along line X-X of Figure 7.

Figure 9 is a cross-sectional view of one embodiment of a moving bed reactor according to the present invention.

Figure 10 is an explanatory diagram of a sub-louvre according to the present invention.

Figure 11 is an explanatory diagram of a partition plate provided for a sub-louvre in accordance with the present invention.

Figure 12 is a cross-sectional view of one embodiment of a partition plate provided for a sub-louvre according to the present invention and a rotary plate provided for the partition plate.

Figure 13 is a cross-sectional view of another embodiment of a moving bed reactor according to the present invention.

Figure 14 is a partially enlarged view of the vicinity of a louvre showing the position and structure of a triangular type sub-louvre according to the present invention.

Figure 15 is an explanatory diagram of the triangular type sub-louvre.

Figure 16 is an explanatory diagram of a partition plate provided for the triangular type sub-louvre.

An important feature of a moving bed reactor according to the present invention is that a granular material is prevented from residence on louvre boards and is maintained in a moving state to avoid accumulation of dust on the louvre boards at the gas inlet side and excessive rising of the pressure loss. In a preferred embodiment of the present invention, in particular, the ratio of the moving speed of granular material in the vicinity of the louvre and that of granular material elsewhere is variable independently of the flow rate of the granular material in the whole of the reactor, whereby the moving speed of the granular material at the gas inlet side, subjected to a higher load, may be controlled with checking the pressure loss.

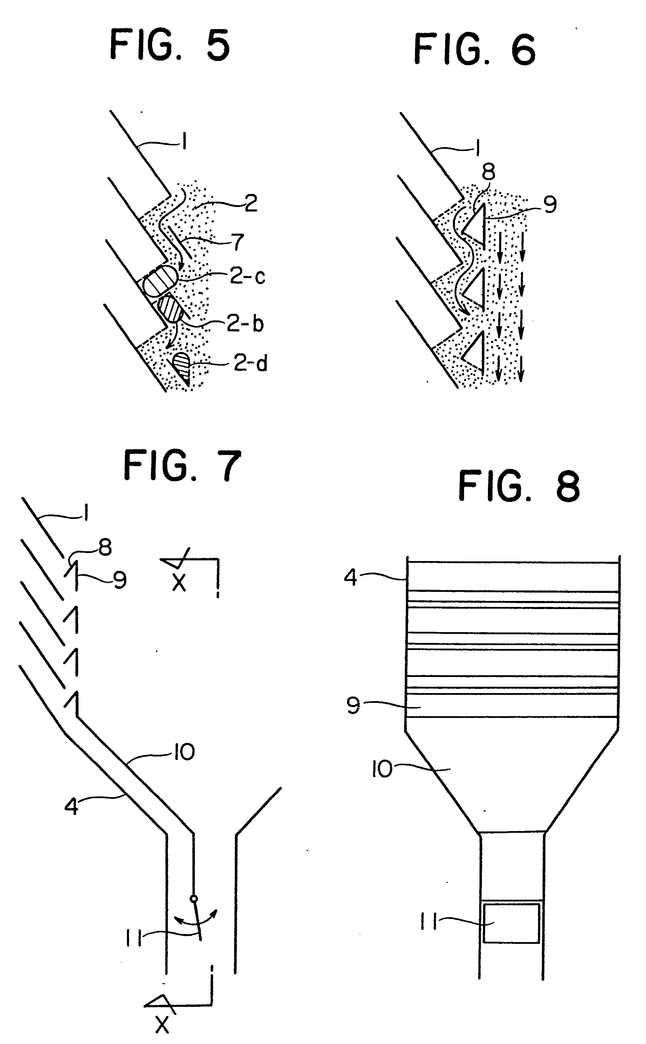

The present invention will further be explained in detail with reference to the accompanying drawings. Referring to Figure 2, the stationary region 2-a of granular material 2 is formed due to the fact that the side pressure from inside on the region 2-a and the side pressure by the weight of the region itself are balanced. If the side pressure acting from inside can be intercepted by some method so that it will not act directly on part 2-1, therefore, the granular material of part 2-a may be discharged downward and by way of compensation, fresh granular material may then be fed thereto from above. Figure 5 illustrates a method (known from EP-A-057 468) in which a sub-louvre 7 is provided near main louvre 1 in such a manner that a louvre board of sub-louvre 7 is positioned at the same slope as, and between, the boards of main louvre 1. According to this method, the side pressure acting from inside on region 2-b is intercepted by the sub-louvre, so discharge of the granular material is smoothly carried out from region 2-b; by way of compensation, the granular material from region 2-c replaces that in region 2-b. However, a wedge-shaped stationary region 2-d tends to form on the sub-louvre, and so the problem of a stationary region of granular material is not avoided.

As shown in Figure 6, by means of a sub-louvre of reverse V-type 8 and 9, there can be provided between the main louvre and the sub-louvre a zig-zag path down which granular material can flow smoothly. The granular material inside the sub-louvre can also move vertically downwards, being unimpeded by the louvre board 9. Thus there is no accumulation of granular material. However, there is little movement of the granular material through gaps between the adjacent louvre boards 9 and the granular material on each side of the sub-louvre moves independently so that the granular material moving from the lowermost stage of the zig-zag path toward the exhaust port is substantially the same as that entering into the uppermost part of the path. Preferably, the V-shape of the sub-louvre has a vertical angle of 30 to 50 degrees.

In order to effect a smooth movement of granular material near the louvre, the flow rate of the granular material extracted from the lowermost stage must of course be secured. Since the discharge port of a reactor is generally provided at the end of an incline with a downgrade from the lowermost stage of the louvre as shown in Figure 1, however, the angle at which granular material 2 is directed to the discharge port in reactor 4 is the smallest on this incline and the moving velocity of the granular material near the incline is the lowest even if any flow regulator is used. Still less, it is impossible to control freely the velocity of the material in this region.

In the preferred embodiment of the present invention, the flow rate of a granular material withdrawn from the lowermost stage of a louvre can be controlled by providing a partition 10 extending from the lower end of vertical louvre board 9 at the lowermost stage of the sub-louvre along casing 4 to the inside of a discharge nozzle to form such a structure that the granular materials above and below partition plate 10 are not mixed, as shown in Figure 7 and Figure 8 corresponding to the cross-section along line X-X of Figure 7. Partition plate 10 is preferably provided at the bottom side thereof with rotary partition plate 11 having a hinge axis extending along the bottom side in such a manner that granular material does not pass between the bottom side of partition plate 10 and the upper side of rotary partition plate 11. The angle of rotary partition plate 11 is preferably remotely controllable from outside the reactor.

According to the above-described structure, the granular material discharged from the lower end of the louvre is passed between partition plate 10 and casing 4, reaching the discharge nozzle without interference from the granular material above partition plate 10. In the discharge nozzle, the cross-sectional areas of the left and right outlet parts can be changed by changing the angle of rotary partition plate 11. Even if the overall rate of discharge is constant, the ratio of the left and right flow rates can continuously be varied by controlling the angle of rotary partition plate 11. Thus, it is possible to make effective the moving velocity distribution of the granular material in the reactor without increasing the whole quantity of discharging.

In another preferred embodiment, a sub-louvre comprises a number of louvre units each having a cross-section of reverse V-type triangular form which is closed and whose one side is directed from the vertex toward the inside of the main louvre in a reverse gradient to the main louvre and the other side is directed from the vertex downward in an outwardly inclined direction with an angle of at most 10 degrees, the lower ends of both the sides being not in contact with the vertex of the next lower sub-louvre. In this case, a granular material moving downward is prevented from clogging in the open part of the reverse V-type louvre unit.

The amount of a granular material moving downward through between the main louvre and sub-louvre is preferably in a proportion of 5 to 20% to that of all the granular material, depending on the property of the granular material, the size or form of the reactor and the variety of a gas to be processed.

The following examples are given in order to illustrate the present invention in detail without limiting the same.

*Examples*

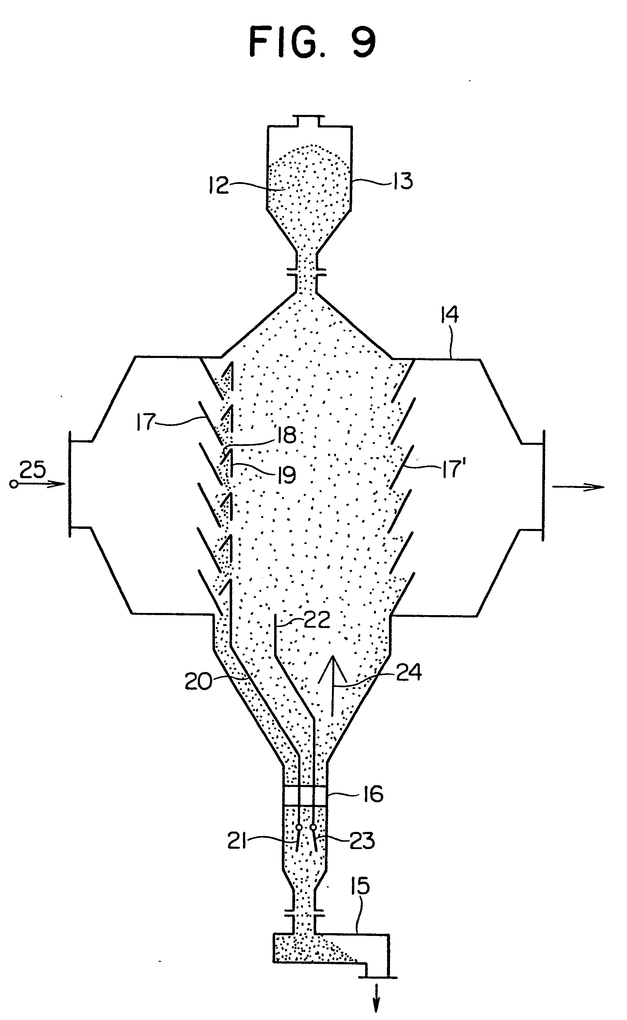

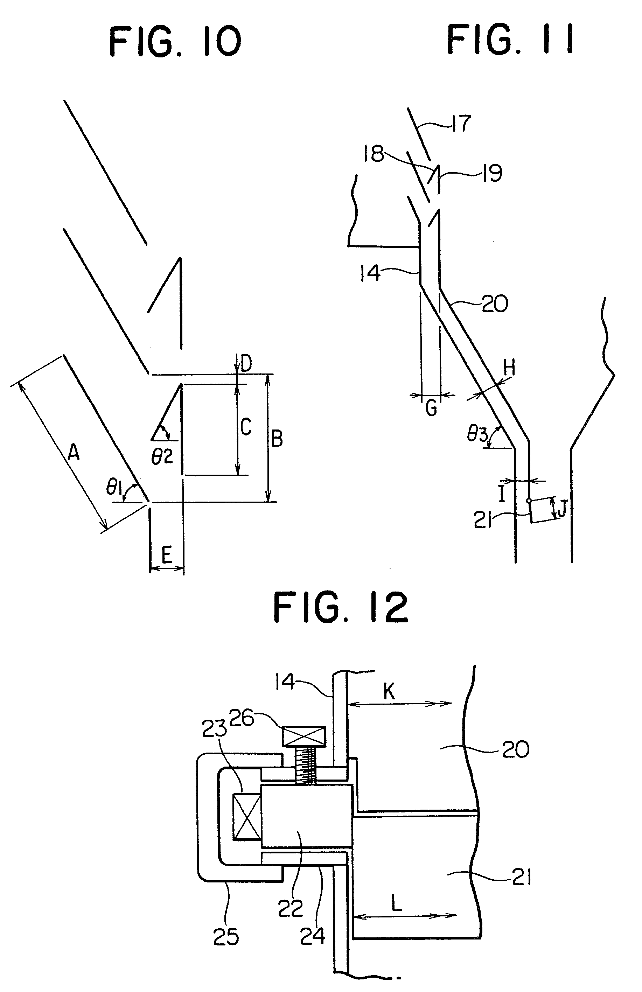

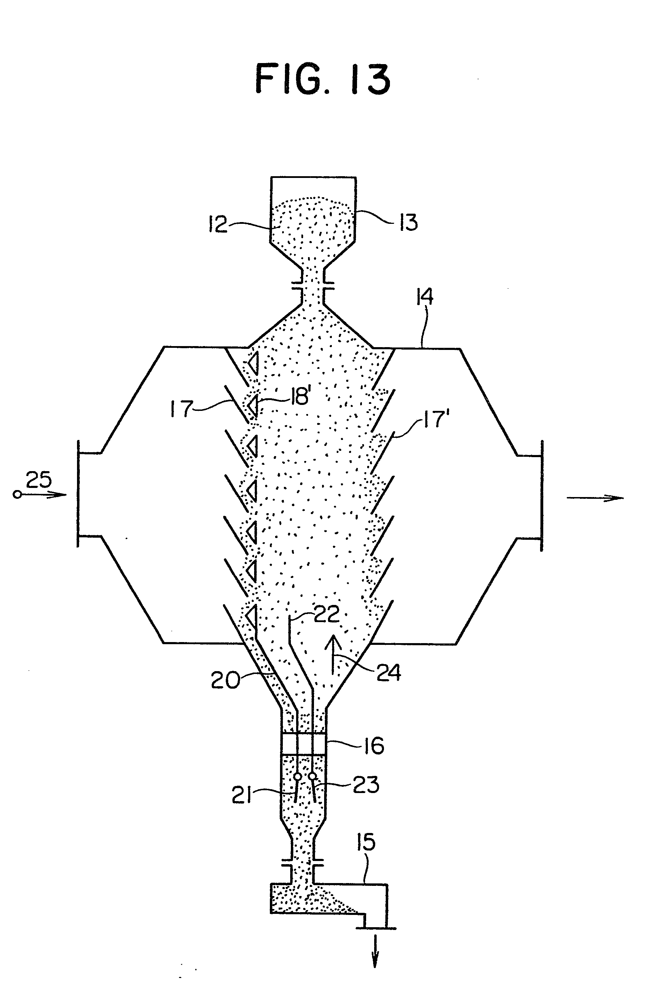

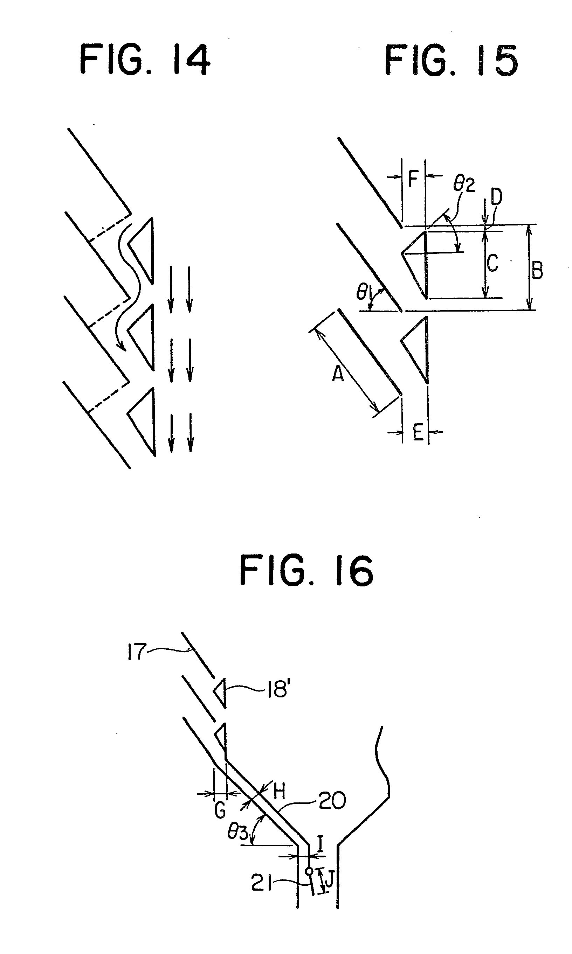

In Figures 9 and 13 are shown embodiments of the apparatus for the removal of SOx and NOx by dry process according to the present invention, using sub-louvres shown in Figure 10 and Figure 15. Referring to Figure 9 and Figure 13, activated coke 12 with an average grain diameter of about 8 mm is packed in hopper 13 to hold constant the level of the granular material, passed through reactor 14 and discharged by metering feeder 15. Gas 25 enters reactor 14 from the side thereof, is passed through the louvres and activated coke bed where it is subjected to removal of SOx, NOx and dust, and leaves reactor 14 from the opposite side thereof. The activated coke in reactor 14 is supported by a main louvre 17 at the inlet side and by a main louvre 17' at the outlet side. Near main louvre 17 at the inlet side, there are provided a sub-louvre of reverse V-type 18 and 19 in Figure 9 and of triangular type 18' in Figure 13, a partition plate 20 and a rotary partition plate 21. In the intermediate portion of the activated coke bed, there are provided a partition plate 22, a rotary partition plate 23 and a flow regulator 24 for the purpose of controlling the whole moving velocity distribution. Control of the moving velocity is ordinarily carried out by observing the falling velocity of the activated coke through sight glass 16.

Figure 10 and Figure 15 show the details of the sub-louvres at the inlet side. The dimensions of the sub-louvres at the inlet side are summarized below:

|       | $\theta_1$ | $\theta_2$ | A (mm) | B (mm) | C (mm) | D (mm) | E (mm) | F (mm) |
|-------|------|------|--------|--------|--------|--------|--------|--------|
| Fig. 10 | 60° | 60° | 400 | 300 | 217 | 20 | 75 | — |
| Fig. 15 | 70° | 50° | 480 | 450 | 350 | 30 | 115 | 100 |

Figure 11 and Figure 16 each show the details from the lower end of the sub-louvre at the inlet side to the discharge port. The dimensions of each part are summarized below:

|           | $\theta_3$ | G (mm) | H (mm) | I (mm) | J (mm) |
|-----------|-----|--------|--------|--------|--------|
| Figure 11 | 60° | 125 | 108 | 70 | 150 |
| Figure 16 | 63° | 115 | 100 | 100 | 150 |

Figure 12 is a partially enlarged cross-sectional view of the lower end of the partition plate 20 and the mechanism of the rotary partition plate 21. Rotary partition plate 21, rotary shaft 22 and nut 23 are made up in one body revolved together. In addition, outer cylinder 24, 25 is provided as a cover for preventing leakage of a gas from casing 14 and a locking bolt 26 is provided to control revolution of rotary shaft 22. The dimensions K and L are 155 mm and 153 mm respectively.

In the sub-louvre as shown in Figure 9, Figure 10 and Figure 11, a porous or perforated plate can be used as the vertical louvre plate 19 so as to increase and homogenize the flowing area of gas and to lower the pressure loss in the gas.

Comparison of the moving bed reactor provided with a sub-louvre according to the present invention with a sub-louvre free moving bed reactor of the prior art has been carried out. In the case of a reactor without any sub-louvre, the pressure loss in the reactor became too excessive to be operated normally after 200-300 hours. At that time, the operation was stopped and the reactor was examined to find that a thick dust layer was formed at the upstream side of the stationary granular material on the louvre boards at the inlet side and reaction products accumulated on the inside of the louvre to form masses substantially blocking the flow of gas.

In the case of a reactor provided with a sub-louvre according to the present invention, the flow of the granular material in the sub-louvre part being about 10% of the whole, the pressure loss in the reactor rose slightly for about 50 hours from the start of the operation but thereafter continuous and stable operation was carried out without increase in the pressure loss. The fluctuation of the pressure loss and the results of examination of the reactor when opened are tabulated below:

|                                | Pressure Loss | State of Sub-Louvre | State of Inside of Sub-Louvre |
|--------------------------------|---------------|----------------------|-------------------------------|
| No sub-louvre                  | initial: 4000 Pa; after 200-300 hrs: 33000 Pa | most part of louvre gap was clogged. Thick dust layer was formed upstream | large mass formed near louvre |
| Figure 10 (reverse V-type      | initial: 6600 Pa; after 50 hr: 8000 Pa; thereafter constant | free from clogging and dust layer; adhesion of products to inside of lower unit | no mass |
| Figure 15 (triangular louvre)  | initial: 6600 Pa; after 50 hr: 8000 Pa; thereafter constant | free from clogging and dust layer; no adhesion of product | no mass |

A moving bed reactor according to the present invention can be applied to various conditions by controlling suitably the flow quantity of granular material in the sub-louvre region depending upon the dust concentration of waste gas and the quantity of reaction products formed per unit time.

**Claims**

1. A moving bed reactor wherein a granular material (2) is packed and held by a louvre structure (1), moved downwards and brought into contact with a gas passing through the louvre, characterised in that a sub-louvre, comprising louvre units (8, 9; 18, 19) each of a reverse V-type, is provided inside a main louvre (1) for guiding the granular material; the sub-louvre is aligned in parallel with the main louvre, each louvre unit of the sub-louvre has a vertex positioned at an intermediate height between the boards of the main louvre, one side (8; 18) of each sub-louvre unit is directed toward the inside of the main louvre in a reverse gradient to the main louvre and the other side (9; 19) of each sub-louvre unit is an upright part which is vertical or is inclined at an angle of at most 10 degrees to the vertical.

2. A reactor as claimed in claim 1, wherein at least one sub-louvre unit has a closed triangular form.

3. A reactor as claimed in claim 1 or claim 2, wherein a partition (10) extends from the lower end of the lowermost sub-louvre unit along the inside wall (4) of a casing of the reactor to the inside of a discharge nozzle of the reactor.

4. A reactor as claimed in claim 3, wherein the end of the partition in the discharge nozzle is provided with a rotary flow control plate (11).

5. A reactor as claimed in claim 3 or claim 4, wherein another partition (22) having a rotary flow control plate (23) is additionally provided in the intermediate part of the moving bed.

6. A reactor as claimed in any foregoing claim wherein the upright part of each sub-louvre unit is a porous or perforated plate.

7. A reactor as claimed in any foregoing claim wherein the V of each sub-louvre unit has an included angle of 30 to 50 degrees.

8. A reactor as claimed in any foregoing claim wherein the proportion of granular material moving downward between the main louvre and sub-louvre is of 5 to 20% of the whole granular material.

## Patentansprüche

1. Reaktor mit sich bewegendem Bett, bei welchem ein körniges Material (2) durch einen Jalousieaufbau (1) gepackt und gehalten, nach unten bewegt und in Kontakt mit einem durch die Jalousie hindurchgehenden Gas gebracht wird, dadurch gekennzeichnet, dass die Nebenjalousie mit Jalousieeinheiten (8, 9; 18, 19), von denen jede die Bauweise eines auf dem Kopf stehenden V hat, innerhalb einer Hauptjalousie (1) zum Führen des körnigen Materials vorgesehen ist, dass die Nebenjalousie parallel zu der Hauptjalousie fluchtend ausgerichtet ist, dass jede Jalousieeinheit der Nebenjalousie einen Scheitel aufweist, der sich auf einer Zwischenhöhe zwischen den Leisten der Hauptjalousie befindet, dass eine Seite (8; 18) jeder Nebenjalousieeinheit zur Innenseite der Hauptjalousie in einen umgekehrten Gradienten zu der Hauptjalousie gerichtet ist und dass die andere Seite (9; 19) jeder Nebenjalousieeinheit ein aufrechtes Teil ist, das vertikal oder in einem Winkel von höchstens 10 Grad zur Vertikalen geneigt ist.

2. Reaktor nach Anspruch 1, bei welchem wenigstens eine Nebenjalousieeinheit eine geschlossene Dreiecksform hat.

3. Reaktor nach Anspruch 1 oder 2, bei welchem eine Trennwand (10) sich von dem unteren Ende der untersten Nebenjalousieeinheit längs der Innenwand (4) eines Gehäuses des Reaktors zur Innenseite eines Abgabestutzens des Reaktors erstreckt.

4. Reaktor nach Anspruch 3, bei welchem das Ende der Tennwand im Abgabestutzen mit einer Drehplatte (11) für die Flusssteuerung versehen ist.

5. Reaktor nach Anspruch 3 oder 4, bei welchem eine weitere mit einer Drehplatte (23) für die Flusssteuerung versehene Trennwand (22) zusätzlich in dem Zwischenteil des sich bewegenden Betts vorgesehen ist.

6. Reaktor nach einem vorhergehenden Anspruch, bei welchem das aufrechte Teil einer jeden Nebenjalousieeinheit eine poröse oder perforierte Platte ist.

7. Reaktor nach einem vorhergehenden Anspruch, bei welchem das V einer jeden Nebenjalousieeinheit einen eingeschlossenen Winkel von 30 bis 50 Grad aufweist.

8. Reaktor nach einem vorhergehenden Anspruch, bei welchem der Anteil des körnigen Materials, das sich zwischen der Hauptjalousie und der Nebenjalousie nach unten bewegt, 5 bis 20% des gesamten körnigen Materials ist.

## Revendications

1. Réacteur à lit mobile dans lequel un matériau granulaire (2) est chargé et maintenu par une structure de dispositif à claire-voie (1), se déplace vers le bas et est mis en contact avec un gaz traversant le dispositif à claire-voie, caractérisé en ce qu'un dispositif à claire-voie inférieur, comprenant des unités de dispositif à claire-voie (8, 9; 18, 19) chacune du type en V inversé, est prévu à l'intérieur d'un dispositif à claire-voie principal (1) pour guider le matériau granulaire, en ce que le dispositif à claire-voie inférieur est en alignement parallèle avec le dispositif à claire-voie principal, en ce que chaque unité de dispositif à claire-voie du dispositif à claire-voie inférieur a un sommet situé à une hauteur intermédiaire entre les panneaux du dispositif à claire-voie principal, en ce qu'un côté (8; 18) de chaque unité de dispositif à claire-voie inférieur est dirigé vers l'intérieur du dispositif à claire-voie principal suivant un gradient inversé par rapport au dispositif à claire-voie principal et en ce que l'autre côté (9; 19) de chaque unité de dispositif à claire-voie inférieur est une partie droite qui est verticale ou qui est inclinée selon un angle d'au plus 10 degrés par rapport à la verticale.

2. Réacteur selon la revendication 1, caractérisé en ce qu'au moins une unité de dispositif à claire-voie inférieur a une forme triangulaire fermée.

3. Réacteur selon la revendication 1 ou la revendication 2, caractérisé en ce qu'une séparation (10) s'étend depuis l'extrémité inférieure de l'unité de dispositif à claire-voie inférieur la plus basse le long de la paroi interne (4) d'une enveloppe du réacteur jusqu'à l'intérieur d'une buse de décharge du réacteur.

4. Réacteur selon la revendication 3, caractérisé en ce que l'extrémité de la séparation dans la buse de décharge est équipée d'une plaque rotative (11) de contrôle d'écoulement.

5. Réacteur selon la revendication 3 ou la revendication 4, caractérisé en ce qu'une autre séparation (22) ayant une plaque rotative (23) de contrôle de l'écoulement est prévue en outre dans la partie intermédiaire du lit mobile.

6. Réacteur selon l'une des revendications précédentes, caractérisé en ce que la partie droite de chaque unité de dispositif à claire-voie inférieur est une plaque poreuse ou perforée.

7. Réacteur selon l'une des revendications précédentes, caractérisé en ce que le V de chaque unité de dispositif à claire-voie inférieur a un angle de dégagement de 30 à 50 degrés.

8. Réacteur selon l'une des revendications précédentes, caractérisé en ce que la proportion de matériau granulaire se déplaçant vers le bas entre le dispositif à claire-voie principal et le dispositif à claire-voie inférieur est de 5 à 20% par rapport à l'ensemble du matériau granulaire.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16